# EUROPÄISCHE PATENTSCHRIFT

(11) **EP 0 583 856 B1**
(45) Veröffentlichungstag und Bekanntmachung des Hinweises auf die Patenterteilung: **04.09.1996**
(21) Anmeldenummer: 93250187.7
(22) Anmeldetag: 23.06.1993
(51) Int. Cl.: H02B 1/38

(54) **Tür für einen Schaltschrank mit einem an ihrer Innenseite anzubringenden Rahmen**
Door for a switchgear cabinet having a frame fixed on its inside
Porte pour armoire de commutation ayant un cadre fixé à sa face interne

(30) Priorität: 18.08.1992 DE 4227634
(43) Veröffentlichungstag der Anmeldung: 23.02.1994
(73) Patentinhaber: SIEMENS AKTIENGESELLSCHAFT, 80333 München (DE)
(72) Erfinder: Probst, Willi, D-60528 Frankfurt/Main (DE); Groh, Hans-Michael, Dipl.-Ing., D-6452 Hainburg 2 (DE); Herr, Klaus-Jürgen, Dipl.-Ing., D-6464 Linsengericht 4 (DE); Blum, Richard, D-6057 Dietzenbach (DE); Küster, Willi, D-6460 Gelnhausen (DE)

(56) Entgegenhaltungen:
- DE-A- 4 103 785
- DE-C- 4 004 838

## Beschreibung

Die Erfindung betrifft eine Tür für einen Schaltschrank mit einem an der Innenseite der Tür zu befestigenden Rahmen, der aus Profilabschnitten zusammengesetzt und mit der Tür mittels an der Innenseite der Tür angebrachter Haltebolzen und mit diesen zusammenwirkender Befestigungselemente zu verbinden ist, wobei in einem der Innenseite näher gelegenen Profilteil des Rahmens zum Durchtritt eines der Haltebolzen jeweils eine Bolzenöffnung und in einem etwa parallelen, von der Innenseite weiter entfernten Profilteil des Rahmens zum Durchtritt des zugeordneten Befestigungselementes eine Befestigungsöffnung angeordnet ist.

Eine Tür dieser Art ist durch das DE-GM 88 13 904 bekannt geworden. Zweck eines solchen zusätzlichen Rahmens ist es, einerseits die Tür gegen unerwünschte Verformungen zu versteifen und andererseits die Möglichkeit zur Montage von Geräten, Bedienungselementen, Meßinstrumenten und ähnlichen Einbauten zu schaffen. Bei der Anordnung nach dem genannten DE-GM sind die Haltebolzen als Gewindebolzen ausgebildet, auf die spezielle, schraubenartig gestaltete Muttern aufschraubbar sind. Der Kopf einer solchen Mutter steht über die Oberflächenebene der Profilabschnitte über. Ferner liegen die Profilabschnitte mit ihrem der Innenseite der Tür zugewandten Profilteil auf der Tür auf.

Der Kraftfluß der Befestigung der Profilabschnitte verläuft somit bei der vorstehend beschriebenen Anordnung über die Haltebolzen, die aufgeschraubten Muttern, die Profilabschnitte und über das Material der Tür zwischen der Befestigungsstelle des Haltebolzens an der Tür und der Auflagezone des Profilabschnittes. Dies kann dazu führen, daß beim Anziehen der Muttern die Tür in der Umgebung der Haltebolzen verformt wird.

Eine weitere Tür dieser Art gemäß den Oberbegriff des Anspruchs 1 ist durch das DE-A- 4 103 785 bekannt geworden. Die Profilabschnitte liegen hier mit ihren der Innenseite der Tür zugewandten Profilteil auf einer Dichtung, die auf der Tür angeordnet ist. Damit ist zwischen der Innenseite der Tür und den der Innenseite näher gelegenen Profilteil ein Abstand vorhanden.

Das Problem der Verformung der Tür beim Anziehen der Mütter kann jedoch auch bei dieser Ausführung trotz der Dichtung auftreten.

Der Erfindung liegt die Aufgabe zugrunde, eine Verformung der Tür nahe den Haltebolzen zu vermeiden und dennoch die erwünschte Versteifungswirkung des Rahmens auf die Tür sicherzustellen.

Diese Aufgabe wird gemäß der Erfindung dadurch gelöst, daß mittels des Befestigungselementes nur der weiter von der Innenseite der Tür entfernte Profilteil des Rahmens mit dem Haltebolzen zu verspannen ist.

Bei dieser Art der Befestigung ist das die Befestigungsstelle der Haltebolzen umgebende Material der Tür frei von verformenden Kräften. Beansprucht wird nur die Befestigungsstelle selbst, und zwar umso geringer je größer die Verbindungsfläche des Haltebolzens ist. Obwohl nun der Rahmen nicht flächenhaft an der Innenseite der Tür anliegt, wird dennoch eine überraschend gute Versteifung der Tür erzielt. Diese beruht darauf, daß durch die Lage der Verbindungsstelle gewissermaßen eine Hebelübersetzung für die Übertragung einer Verformung der Tür auf den Rahmen wirksam ist.

In diesem Zusammenhang empfiehlt es sich, Haltebolzen zu wählen, die zur Befestigung an der Tür einen Bund mit einem gegenüber dem Schaft vergrößerten Durchmesser besitzen.

Bei einer vorteilhaften Ausgestaltung der Erfindung kann vorgesehen sein, daß
- jeder Haltebolzen einen Schaft mit einer Endfläche besitzt,
- der von der Innenseite der Tür weiter entfernte Profilteil der Profilabschnitte des Rahmens einen jeweils einem der Haltebolzen zugeordneten, sich in Richtung auf die Innenseite der Tür erstreckenden, die Befestigungsöffnung aufweisenden und zur Abstützung auf der Endfläche bestimmtem Durchzug besitzt und
- der Schaft des Haltebolzens mit einem Innengewinde zur Aufnahme des als Schraube mit Außengewinde ausgebildeten Befestigungselementes versehen ist.
Auf diese Weise wird einerseits die Verbindung zwischen dem Haltebolzen und dem weiter von der Innenseite der Tür entfernten Profilteil des Rahmens in einer gewissen Entfernung von der Innenseite der Tür hergestellt. Andererseits kann die durch den Durchzug geschaffene Vertiefung zur Aufnahme eines Kopfes des Befestigungselementes dienen, wodurch der Rahmen eine durchgehende Auflagenfläche für Einbauteile erhält.

In diesem Zusammenhang empfiehlt sich eine Gestaltung derart, daß jeder Durchzug eine von zwei spiegelsymmetrisch angeordneten, etwa einem Vierteilkreis entsprechenden Bogenabschnitten begrenzte Querschnittsform aufweist und daß das Befestigungselement einen von dem Durchzug ohne Überstand aufzunehmenden Senkkopf besitzt. Die gleiche Form des Durchzuges ist aber auch geeignet, entsprechend bemessene gewindefurchende Schrauben zur Befestigung von Einbauteilen oder von Eckstücken aufzunehmen, die zur Verbindung der Profilabschnitte dienen, aus denen der Rahmen besteht.

Wie bereits erwähnt, beruht die verbesserte Wirkung des Rahmens auf der Anordnung der Verbindungsstellen zwischen den Haltebolzen und dem Rahmen in einer gewissen Entfernung von der Innenseite der Tür. Im Rahmen der Erfindung kann diese Wirkung noch dadurch verbessert werden, daß je Profilabschnitt wenigstens zwei Haltebolzen vorgesehen sind, die jeweils im Bereich zwischen der Mitte des betreffenden Profilabschnittes und Diagonallinien der Tür angeordnet sind. Vermieden wird auf diese Weise eine Befestigung des Rahmens in der Nähe der Diagonallinien, die etwa den Hauptbiegelinien der Tür entsprechen.

Obwohl ein nach der Erfindung mit der Tür verbundener Rahmen den Widerstand der Tür gegen eine unerwünschte Verformung erheblich steigert, kann das Auftreten von Verformungen oder Schwingungen nicht völlig ausgeschlossen werden. Jedoch können diese Erscheinungen dadurch vermindert werden, daß an der Innenseite der Tür und an dem der Innenseite näher gelegenen Profilteil der Profilabschnitte des Rahmens jeweils ein Element eines textilen Haftsystems angebracht ist und daß die Elemente des Haftsystems im montierten Zustand des Rahmens miteinander im Eingriff stehen.

Textile Haftsysteme sind beispielsweise als Klettbänder bekannt. Dabei wirkt jeweils ein samtartiges Band mit einem weiteren Band zusammen, das aufgeschnittene Schlaufen besitzt. Es können auch zwei solcher Schlaufenbänder benutzt werden. Im vorliegenden Zusammenhang sind diese Bänder dadurch wirksam, daß sie eine Verschiebung zwischen der Tür und dem Rahmen verhindern oder eine solche Verschiebung dämpfen.

Die Erfindung wird im folgenden anhand des in den Figuren dargestellen Ausführungsbeispieles näher erläutert.

Die Figur 1 zeigt einen Schaltschrank mit geöffneter Tür, an deren Innenseite ein Rahmen angebracht ist.

Die Figur 2 zeigt einen Profilabschnitt im Schnitt.

In der Figur 3 sind im Schnitt Einzelheiten des Rahmens und seiner Befestigung bezeigt.

Die Figur 4 zeigt eine abgewandte Ausführung der Befestigung des Rahmens.

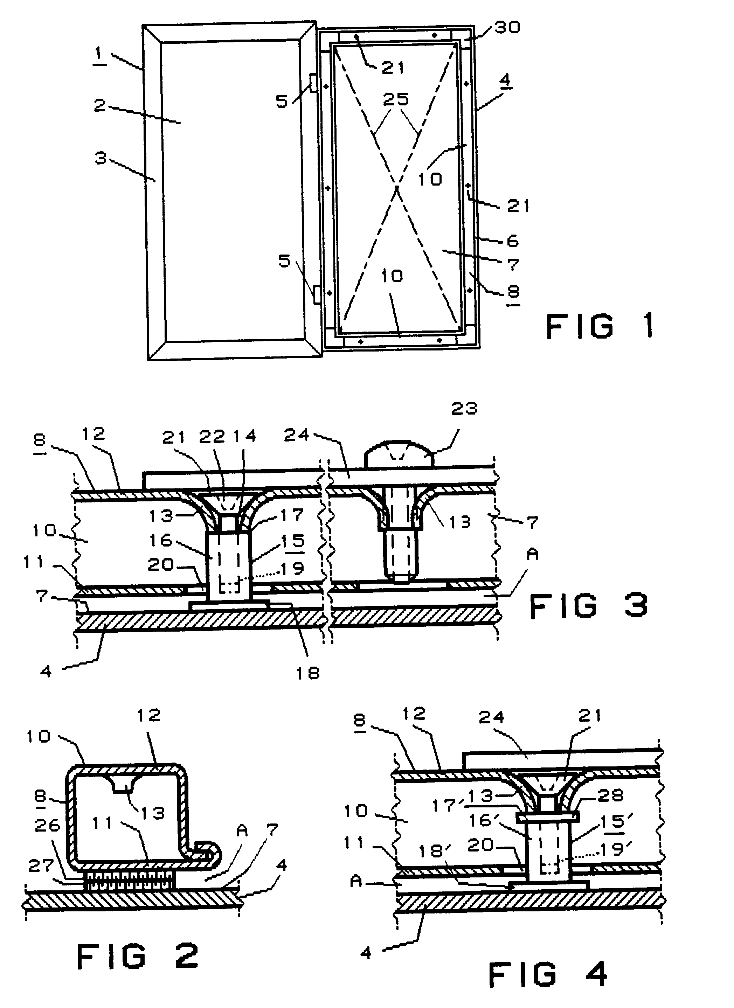

Der Schaltschrank 1 gemäß der Figur 1 weist einen Schrankkorpus 2 mit einer frontseitigen Rahmenfläche 3 auf. Die Rahmenfläche 3 ist zur Auflage einer in der Figur 1 geöffnet gezeigten Tür 4 vorgesehen, die an Schanieren 5 gehalten ist. Innerhalb der von randseitigen Abkantungen 6 der Tür 4 begrenzten Innenseite 7 ist ein Rahmen 8 mittels Befestigungsmitteln 21 in der Form von Senkkopfschrauben befestigt, von denen einige in der Figur 1 angedeutet sind. Der Rahmen besteht aus einzelnen Profilabschnitten 10, die ein geschlossenes Hohlprofil gemäß der Figur 2 oder eine andere geeignete Profilform besitzen können.

In der Figur 2 sind die Tür 4 und ein Profilabschnitt 10 des Rahmens 8 im Schnitt gezeigt. Der Profilabschnitt 10 weist zwei etwa parallele Profilteile 11 und 12 auf, wobei der Profilteil 11 näher zu der Innenseite 7 der Tür 4 gelegen ist als der Profilteil 12. Der Profilteil 12 ist in gleichmäßiger Teilung mit Durchzügen 13 versehen, die sowohl zur Befestigung des Rahmens 8 an der Tür 4 als auch zur Befestigung von Einbauteilen oder Geräten an dem Rahmen 8 vorgesehen sind. Wie näher der Figur 3 zu entnehmen ist, enthalten die Durchzüge 13 jeweils eine Befestigungsöffnung 14 für ein Befestigungselement 21, das die Gestalt einer Senkkopfschraube mit einem Senkkopf 22 aufweist. Als Widerlager für die Durchzüge 13 sind Haltebolzen 15 vorgesehen, die einen Schaft 16 mit einer Endfläche 17 zur Auflage der Durchzüge 13 sowie einen Bund 18 mit vergrößertem Durchmesser aufweisen. Der Schaft 16 enthält ein Innengewinde 19 für das Befestigungselement 21. Eine Bolzenöffnung 20 in dem Profilteil 11 der Profilabschnitte 10 ist so bemessen, daß der Bund 18 hindurchtreten kann. Es ist zweckmäßig, die Haltebolzen 16 durch ein geeignetes Schweißverfahren mit der Tür 4 zu verbinden.

Die Senkköpfe 22 der Befestigungselemente 21 finden in den trichterförmigen Öffnungen der Durchzüge 13 Platz, ohne über den Profilteil 12 überzustehen. Die gewählte Querschnittsform der Durchzüge 13 mit einer Begrenzung durch Viertelkreisbögen ist gleichermaßen zum Eindrehen gewindefurchender Schrauben 23 geeignet, wie dies der rechte Teil der Figur 3 zeigt. Beispielsweise wird auf diese Weise eine Tragschiene 24 befestigt.

Die beschriebenen Elemente sind im übrigen so bemessen, daß der zur Tür 4 weisende Profilteil 11 des Rahmens 8 der Innenseite 7 der Tür 4 mit einem gewissen Abstand A gegenübersteht. Dieser Abstand A ist in den Figuren 2, 3 und 4 lediglich zur Verdeutlichung mit einer relativ großen Bemessung dargestellt. Tatsächlich ist es nur erforderlich, eine Berührung unter Kraftübertragung zwischen dem Rahmen 8 und der Tür 4 über den Profilteil 11 zu verhindern, wenn die Befestigungselemente festgezogen werden.

Für die erwünschte Versteifungswirkung des Rahmens 8 auf die Tür 4 ist die Lage der Verbindungen zwischen dem Rahmen 8 und der Tür 4, d. h. die Lage der Haltebolzen 15, von Bedeutung. Die Haltebolzen 15 sind, wie die Figur 1 anhand der mit Kreuzen markierten Befestigungselemente 21 zeigt, abseits der strichpunktiert eingezeichneten Diagonalen 25 angeordnet. Dabei sind je drei Haltebolzen 15 für die längeren Profilbaschnitte 10 und je zwei Haltebolzen für die kürzeren Profilabschnitte 19 vorgeshen. An den Ecken können die Profilabschnitte 10 miteinander verschweißt sein. In dem gezeigten Ausführungsbeispiel sind die Profilabschnitte 10 jedoch durch aufgelegte Eckstücke 30 verbunden, was die Montage des Rahmens 8 erleichtert. Die Verbindungen der Eckstücke 30 mit den Profilabschnitten 10 können sinngemäß ebenso ausgebildet sein, wie dies in der Figur 3 für die Tragschiene 24 gezeigt ist.

In dem Zwischenraum A kann gemäß der Figur 2 ein textiles Haftsystem angeordnet sein. Die zugehörigen bandförmigen Elemente 26 und 27 werden zweckmäßig mittels selbstklebender Haftschichten an der Innenseite 7 der Tür 4 und an den Profilteilen 11 befestigt. Dadurch kommen die Elemente 26 und 27 bei der Montage des Rahmens 8 an der Tür 4 miteinander in Eingriff und steigern die versteifende und schwingungsdämpfende Wirkung des Rahmens 8.

Gemäß der Figur 4 sind abgewandelte Haltebolzen 15' mit einem verkürzten Schaft 16' vorgesehen, die eine Endfläche 17', einen Bund 18' und ein Innengewinde 19' besitzen. Durch den verkürzten Schaft 16' wird Platz für eine zwischen die Endfläche 17' und den Durchzug 13 einzulegende Zwischenlage 28 in Gestalt einer Scheibe geschaffen. Auf diese Weise können Maßtoleranzen beim Zusammenbau der Teile überbrückt werden.

## Patentansprüche

1. Tür (4) für einen Schaltschrank (1) mit einem an der Innenseite (7) der Tür (4) zu befestigenden Rahmen (8), der aus Profilabschnitten (10) zusammengesetzt und mit der Tür (4) mittels an der Innenseite (7) der Tür (4) angebrachter Haltebolzen (15, 15') und mit diesen zusammenwirkender Befestigungselemente (21) zu verbinden ist, wobei in einem der Innenseite (7) näher gelegenen Profilteil (11) des Rahmens (8) zum Durchtritt eines der Haltebolzen (15, 15') jeweils eine Bolzenöffnung (20) und in einem etwa parallelen, von der Innenseite (7) weiter entfernten Profilteil (12) des Rahmens (8) zum Durchtritt des zugeordneten Befestigungselementes (21) eine Befestigungsöffnung (14) angeordnet ist, wobei
zwischen der Innenseite (7) der Tür (4) und dem der Innenseite (7) näher gelegenen Profilteil (11) ein Abstand (A) vorhanden ist **dadurch gekennzeichnet,** daß mittels des Befestigungselementes (21) nur der weiter von der Innenseite (7) der Tür (4) entfernte Profilteil (12) des Rahmens (8) mit dem Haltebolzen (15, 15') zu verspannen ist.

2. Tür nach Anspruch 1,
**dadurch gekennzeichnet,** daß
- jeder Haltebolzen (15, 15') einen Schaft (16, 16') mit einer Endfläche (17, 17') besitzt,
- der von der Innenseite (7) der Tür (4) weiter entfernte Profilteil (12) der Profilabschnitte (10) des Rahmens (8) einen jeweils einem der Haltebolzen (15, 15') zugeordneten, sich in Richtung auf die Innenseite (7) der Tür (4) erstreckenden, die Befestigungsöffnung (14) aufweisenden und zur Abstützung auf der Endfläche (17, 17') bestimmtem Durchzug (13) besitzt und
- der Schaft (16, 16') des Haltebolzens (15, 15') mit einem Innengewinde (19) zur Aufnahme des als Schraube mit Außengewinde ausgebildeten Befestigungselementes (21) versehen ist.

3. Tür nach Anspruch 1 oder 2,
**dadurch gekennzeichnet,** daß die Haltebolzen (15, 15') zur Befestigung an der Tür (4) jeweils einen Bund (18, 18') mit einem gegenüber dem Schaft (16, 16') vergrößerten Durchmesser besitzen.

4. Tür nach einem der vorangehenden Ansprüche,
**dadurch gekennzeichnet,** daß jeder Durchzug (13) eine von zwei spiegelsymmetrisch angeordneten, etwa einem Vierteilkreis entsprechenden Bogenabschnitten begrenzte Querschnittsform aufweist und daß das Befestigungselement (21) einen von dem Durchzug (13) ohne Überstand aufzunehmenden Senkkopf (22) besitzt.

5. Tür nach einem der vorangehenden Ansprüche,
**dadurch gekennzeichnet,** daß je Profilabschnitt (10) wenigstens zwei Haltebolzen (15, 15') vorgesehen sind, die jeweils im Bereich zwischen der Mitte des betreffenden Profilabschnittes (9) und Diagonallinien (25) der Tür (4) angeordnet sind.

6. Tür nach einem der vorangehenden Ansprüche,
**dadurch gekennzeichnet,** daß an der Innenseite (7) der Tür (4) und an dem der Innenseite (7) näher gelegenen Profilteil (11) der Profilabschnitte (10) des Rahmens (8) jeweils ein Element (26, 27) einen textilen Haftsystems angebracht ist und daß die Elemente (26, 27) des Haftsystems im montierten Zustand des Rahmens (8) miteinander im Eingriff stehen.

## Claims

1. Door (4) for a switchgear cabinet (1) having a frame (8) which is to be secured to the inside (7) of the door (4), is composed of profiled sections (10) and is to be connected with the door (4) by means of holding pins (15, 15') provided on the inside (7) of the door (4) and by means of securing elements (21) which cooperate with said holding pins (15, 15'), wherein a respective pin opening (20) for the through-passage of one of the holding pins (15, 15') is arranged in a profiled portion (11) of the frame (8) that is placed nearer the inside (7), and a securing opening (14) for the through-passage of the associated securing element (21) is arranged in a substantially parallel profiled portion (12) of the frame (8) that is further away from the inside (7), wherein a clearance (A) is provided between the inside (7) of the door (4) and the profiled portion (11) which is placed nearer the inside (7), characterised in that only the profiled portion (12) of the frame (8) that is further away from the inside (7) of the door (4) is to be braced with the holding pin (15, 15') by means of the securing element (21).

2. Door according to claim 1, characterised in that
- each holding pin (15, 15') has a shank (16, 16') with an end face (17, 17');
- the profiled portion (12) of the profiled sections (10) of the frame (8), which profiled portion (12) is further away from the inside (7) of the door (4), has a plunging portion (13) which is associated with, in each case, one of the holding pins (15, 15'), extends in the direction of the inside (7) of the door (4), presents the securing opening (14) and is intended to be stayed on the end face (17, 17'); and
- the shank (16, 16') of the holding pin (15, 15') is provided with an internal thread (19) for the accommodation of the securing element (21) which is formed as a screw with an external thread.

3. Door according to claim 1 or 2, characterised in that the holding pins (15, 15') for the purposes of securement to the door (4) have a respective collar (18, 18') that has a diameter which is increased in relation to the shank (16, 16').

4. Door according to one of the preceding claims, characterised in that each plunging portion (13) has a cross-sectional form which is delimited by two arc sections which are arranged with mirror-symmetry and substantially correspond to a quarter circle and in that the securing element (21) has a countersunk head (22) which is to be accommodated by the plunging portion (13) without any projecting length.

5. Door according to one of the preceding claims, characterised in that per profiled section (10) there are provided at least two holding pins (15, 15'), each of which is arranged in the region between the centre of the relevant profiled section (9) and diagonal lines (25) of the door (4).

6. Door according to one of the preceding claims, characterised in that provided on the inside (7) of the door (4) and on the profiled portion (11) of the profiled sections (10) of the frame (8), which profiled portion (11) is placed nearer the inside (7), there is a respective element (26, 27) of a textile adhesive system and in that the elements (26, 27) of the adhesive system are engaged with each other in the assembled state of the frame (8).

## Revendications

1. Porte (4) d'une armoire (1) de distribution comportant un cadre (8) à fixer au côté intérieur (7) de la porte (4), qui est composé de tronçons (10) de profilé et qui doit être relié à la porte (4) au moyen de boulons (15, 15') de maintien mis en place du côté (7) intérieur de la porte (4) et d'éléments (21) de fixation coopérant avec ceux-ci, une ouverture (20) pour boulons étant ménagée dans une partie (11) de profilé du cadre (8) proche du côté intérieur (7) pour le passage de l'un des boulons (15, 15') de maintien et une ouverture (14) de fixation étant ménagée dans une partie (12) de profilé du cadre (8) à peu près parallèle au côté intérieur (7) et plus éloignée de celui-ci pour le passage de l'élément (21) de fixation associé, une distance (A) existant entre le côté intérieur (7) de la porte (4) et la partie (11) de profilé proche du côté intérieur (7),
caractérisée en ce que seule la partie (12) de profilé du cadre (8), qui est plus éloignée du côté intérieur (7) de la porte (4), peut être bloquée par le boulon (15, 15') de maintien au moyen de l'élément (21) de fixation.

2. Porte suivant la revendication 1,
caractérisée en ce que
- chaque boulon (15, 15') de maintien comporte une broche (16, 16') ayant une surface (17, 17') d'extrémité,
- la partie (12) de profilé des tronçons (10) de profilé du cadre (8), qui est éloignée du côté intérieur (7) de la porte (4) comporte un passage (13) associé à l'un des boulons (15, 15') de maintien, s'étendant dans la direction du côté intérieur (7) de la porte (4), comportant l'ouverture (14) de fixation et destiné à s'appuyer sur la surface (17, 17') d'extrémité et
- la broche (16, 16') du boulon (15, 15') de maintien est munie d'un taraudage (19) pour la réception de l'élément (21) de fixation ayant la forme d'une vis filetée.

3. Porte suivant la revendication 1 ou 2,
caractérisée en ce que les boulons (15, 15') de maintien destinés à la fixation à la porte (4) comportent chacun un collet (18, 18') de diamètre plus grand que celui de la broche (16, 16').

4. Porte suivant l'une des revendications précédentes,
caractérisée en ce que chaque passage (13) a une section transversale de forme délimitée par deux tronçons courbes disposés symétriquement comme dans un miroir et correspondant à peu près à un quart de cercle et l'élément (21) de fixation comprend une tête conique (22) pouvant être reçue par le passage (13) sans en faire saillie.

5. Porte suivant l'une des revendications précédentes,
caractérisée en ce qu'il est prévu par tronçon (10) de profilé au moins deux boulons (15, 15') de maintien, qui sont montés chacun dans la zone comprise entre le milieu du tronçon (9) concerné de profilé et les diagonales (25) de la porte (4).

6. Porte suivant l'une des revendications précédentes,
caractérisée en ce qu'un élément (26, 27) d'un système textile d'adhésif est mis en place du côté (7) intérieur de la porte (4) et sur la partie (11) de profilé des tronçons de profilé (10) du cadre (8), qui est proche du côté intérieur (7) et les éléments (26, 27) du système d'adhésif sont en prise l'un avec l'autre lorsque le cadre (8) est à l'état monté.
